(19) Europäisches Patentamt

European Patent Office

Office européen des brevets

(11) **EP 1 158 771 A2**

(12) **EUROPÄISCHE PATENTANMELDUNG**

(43) Veröffentlichungstag:
28.11.2001 Patentblatt 2001/48

(51) Int Cl.⁷: **H04N 1/401**

(21) Anmeldenummer: **01110140.9**

(22) Anmeldetag: **04.05.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **17.05.2000 US 572416**

(71) Anmelder: **Heidelberger Druckmaschinen Aktiengesellschaft**
**69115 Heidelberg (DE)**

(72) Erfinder: **Rombola, Gregory**
**Spencerport, NY 14559 (US)**

(74) Vertreter: **Franzen, Peter et al**
**Heidelberger Druckmaschinen AG,**
**Kurfürsten-Anlage 52-60**
**69115 Heidelberg (DE)**

(54) **Fehlererkennung und -korrektur in Referenzstreifen für Kalibierung von Scanvorrichtungen**

(57)  Die Berechnung von digitalen Verstärkungs- und Nullpunktverschiebungswerten, die in einem digitalen Scanner zur Korrektur der Farbtöne (Linearitätskorrektur) eingesetzt werden, ist besonders störungsanfällig, wenn in einem Referenzstreifen, insbesondere in einem hellen Referenzstreifen, Defekte vorhanden sind. Die Erzeugung von Referenzstreifen, die völlig fehlerfrei sind, ist äußerst schwierig und kostenaufwändig. Die vorliegende Erfindung schließt fehlerhafte Bildstellen aus, die durch Defekte im Referenzstreifen entstehen, indem fehlerhafte Bildstellen ermittelt werden und die Daten, die von einer fehlerhaften Bildstelle stammen, nicht in den Prozess der Berechnung von Werten zur Kalibrierung einfließen.

Fig.1

## Beschreibung

Die vorliegende Erfindung betrifft digitale Scanvorrichtungen und insbesondere eine Vorrichtung und ein Verfahren zur Fehlererkennung und -korrektur in Referenzbereichen für die Kalibrierung von Scanvorrichtungen gemäß dem Oberbegriff des Anspruchs 1.

Ein möglicher Einsatzbereich für Scanvorrichtungen ist die Druckindustrie und insbesondere die Hochleistungsdruckproduktion. Bei einer digitalen Scanvorrichtung handelt es sich um eine Vorrichtung, die ein auf einem Vorlagenglas der Scanvorrichtung positioniertes Bild einliest und ein digitales Bild der Vorlage erzeugt. Hierfür wird eine Lichtquelle eingesetzt, welche das Originaldokument beleuchtet. Das Licht wird von den hellen und dunklen Bildbereichen des Originaldokuments proportional zur Helligkeit des Originaldokuments reflektiert. Das reflektierte Licht wird mittels einer Optik, die z. B. aus Spiegeln und Linsen besteht, fokussiert und auf Photodetektorelemente gerichtet, welche das Bild sequenziell in kleine Punkte, sog. Pixel, auflösen. Die Photodetektorelemente wandeln das Licht in ein proportionales elektrisches Signal für jeden Punkt um. Auf diese Weise werden die Tonwerte des Originaldokuments in ein Muster aus proportionalen Spannungswerten umgewandelt. Die Lichtverteilung wird in eine Anordnung aus Zeilen und Spalten aufgeteilt. Nach der Umwandlung der einzelnen Spannungswerte in ein elektrisches Signal können elektronische Schaltungen zur Manipulation des Bildes eingesetzt werden, z. B. zur Veränderung des Wiedergabeverhältnisses oder zu einer Umkehr der schwarzen und weißen Bildstellen.

In der Druckproduktion wird nach der Signalbearbeitung durch die elektronischen Schaltungen das erzeugte elektrische Signal an einen Drucker geleitet, welcher das elektrische Signal zur Herstellung eines Dokuments verwendet, indem ein über eine lichtempfindliche Trommel geführter Lichtstrahl moduliert wird.

Bei den Photozellen in der Scanvorrichtung kann es sich um einen beliebigen geeigneten photoelektrischen Wandler handeln, z. B. um Photodioden, Phototransistoren oder ladungsgekoppelte Elemente, sog. Charge-Coupled Devices oder CCDs. CCDs bestehen aus einer Reihe von mehreren tausend kleinen Photozellen, die jeweils nur eine Fläche von wenigen Quadratmikrometern einnehmen. Die entsprechend für die Scanfunktion nötigen Schaltkreise sind ebenfalls in die CCDs integriert, so dass der gesamte photoelektrische Wandler nur aus einem Mikrochip besteht. Die Auflösung des Originaldokuments ist proportional zur Größe der einzelnen Pixel, so dass das Originaldokument in Felder von wenigen Mikrometern aufgeteilt ist. Allgemein gilt, dass die Stärke der CCD-Ausgabesignale abnimmt, je mehr Licht auf jedes Pixel fällt. Die von dem CCD ausgegebenen elektrischen Signale entsprechen einer analogen Wiedergabe der Halbton-Bilddichte, die für jedes Pixel erfasst wurde. Die analogen Signale werden mittels eines Analog-Digital (A/D)-Wandlers in entsprechende digitale Signale umgewandelt. Die digitalen Signale von jeder der Zeilen werden sequenziell eingelesen und in einem Zeilenspeicher gespeichert.

In der Regel umfasst eine Scanvorrichtung Schaltungen zur Schattierungskorrektur oder führt einen Algorithmus zur Farbton-Korrektur mittels eines Prozessors aus. Eine Schattierungskorrektur ist nötig, da die Ausgabe des CCD für jedes Pixel nicht immer einheitlich ist, selbst wenn das Original über eine gesamte Scannerzeile eine einheitliche Dichte aufweist. Diese Ungleichmäßigkeit hat verschiedene Ursachen: Z. B. kann es sein, dass die Intensität der Scannerlampe von der Mitte zu den Enden variiert. Die Belichtungslampen umfassen z. B. acht Glühdrähte, die ebenfalls für die Ungleichmäßigkeit verantwortlich sein können. Ein weiterer Grund für eine ungleichmäßige Verteilung kann sich daraus ergeben, dass im Zentrum und am Rand der Linsen unterschiedliche Lichtmengen die Linsen passieren. Außerdem können sich die mehreren tausend Photozellen in dem CCD in ihrer Empfindlichkeit unterscheiden. Wie weiterhin im Folgenden näher erläutert wird, hat die Sensor-Architektur in der Regel mehrere Videokanäle. Aufgrund einer nicht exakten Abstimmung der elektronischen Verstärkung und der Nullpunktverschiebung der Kanäle kann es zu Unterschieden zwischen den einzelnen Kanälen kommen. Darüber hinaus ist die Kanalstruktur derart ausgebildet, dass in der Mitte der Vorrichtung zwischen den Kanälen eine Naht vorhanden ist. Demgemäß besteht die Notwendigkeit, die verschiedenen Datenkanäle in der Mitte der Vorrichtung anzugleichen, damit die Naht nicht sichtbar ist.

Aufgrund der inhärenten Ungleichmäßigkeit der von dem CCD produzierten Signale ist eine effiziente und zuverlässige Kalibrierungsanordnung und ein effizientes und zuverlässiges Kalibrierungsverfahren zur Kompensation von Ungleichmäßigkeiten wünschenswert.

Es ist daher eine Aufgabe der Erfindung, ein Verfahren der eingangs genannten Art zu schaffen, mit der eine effiziente und zuverlässige Kalibrierung der von dem CCD produzierten Signale möglich ist.

Diese Aufgabe wird mit Hilfe des erfindgunsgemäßen Verfahrens zur Fehlererkennung und -korrektur in Referenzstreifen für die Kalibrierung der Scanvorrichtung mit den im Anspruch 1 genannten Merkmalen gelöst.

Die zu kalibrierende Scanvorrichtung scannt zunächst einen hellen Referenzstreifen. Hierbei wird mittels eines Algorithmus überprüft, ob der helle Referenzstreifen fehlerhaft ist. Von einem Defekt im Referenzstreifen stammende Daten werden aus dem Verfahren ausgeschlossen. Anschließend wird die Scanvorrichtung anhand der durch das Scannen des Referenzstreifens gewonnenen Daten ausschließlich der von defekten Bildstellen des Referenzstreifens stammenden Daten kalibriert.

Die Merkmale der vorliegenden Erfindung werden in der folgenden Beschreibung bevorzugter Ausführungsformen in Zusammenhang mit den beigefügten, nachfolgend aufgeführten Zeichnungen näher erläutert.

Es zeigen:

Fig. 1 eine Darstellung einer Sensor-Architektur mit vier Videokanälen;

Fig. 2 eine Darstellung einer bevorzugten Ausführungsform, in welcher der erfindungsgemäße Algorithmus eingesetzt wird.

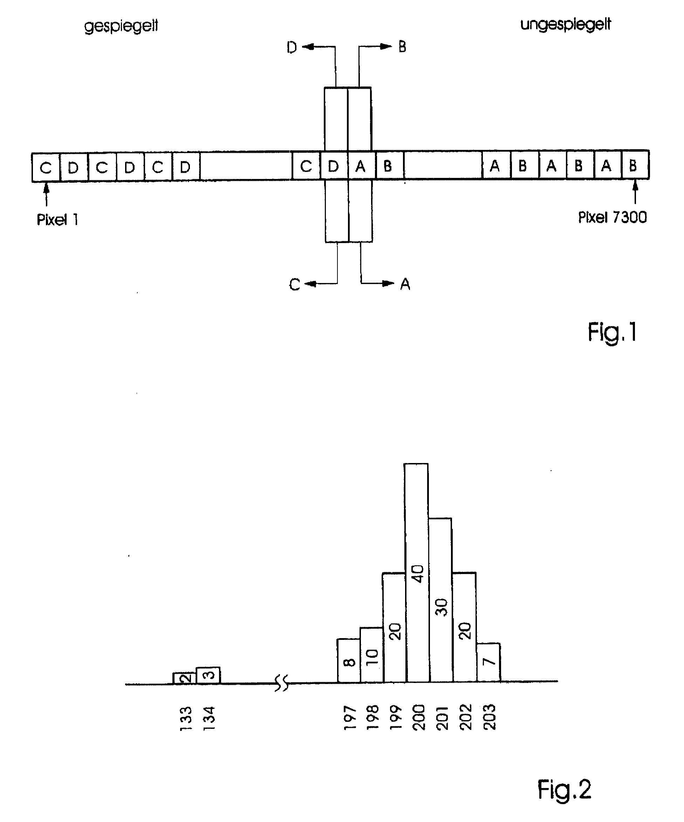

In Fig. 1 ist eine beispielhafte Ausführungsform der Sensor-Architektur für einen Scanner dargestellt, der 7300 aktive Pixel aufweist. Die Sensor-Architektur sieht vier Videokanäle vor, die als A, B, C und D bezeichnet sind, wobei sich auf jeder Seite ein gerader Kanal und ein ungerader Kanal befinden (A und B auf der einen Seite und C und D auf der anderen Seite). In der Mitte der Vorrichtung befindet sich deshalb eine Naht. Wie bereits erläutert, treten aufgrund dieser Anordnung Unterschiede zwischen den Kanälen auf, da die elektronische Verstärkung und die Nullpunktverschiebung der einzelnen Kanäle nicht perfekt abgestimmt werden können. Um eine exakte Wiedergabe des gescannten Originaldokuments zu erstellen, müssen Vorkehrungen zum Ausgleich dieser Unterschiede getroffen werden. Zusätzlich besteht Bedarf an einer Abstimmung der vier Datenkanäle in der Mitte der Vorrichtung, damit die Naht in 8-Bit-Bildern nicht zu sehen ist.

Wie bereits erläutert sind die Pixelwerte quer zur Scanrichtung (also parallel zum linearen CCD-Sensor), die man beim Scannen eines in hohem Maße gleichmäßigen Farbtonfelds eines Originaldokuments erhält, nicht einheitlich. Mehrere Faktoren spielen dabei eine Rolle, z. B. ein unterschiedliches Ansprechen der einzelnen Zellen im Sensor, Unterschiede in der Elektronik der vier Kanäle aufgrund von Unterschieden der Verstärkungs- und Nullpunktverschiebungselektronik, wie bereits erwähnt, sowie Uneinheitlichkeiten entlang der Belichtungsreihe aufgrund des Belichtungs-Untersystems und ein durch die Linse verursachter Abfall des Beleuchtungsniveaus an den äußersten Enden der Scanvorrichtung.

Die vom Belichtungs-Untersystem und vom durch die Linse verursachten Signalabfall hervorgerufenen Unregelmäßigkeiten können im Allgemeinen als Niederfrequenz-Unregelmäßigkeiten betrachtet werden. Unregelmäßigkeiten, die von CCD-Defekten oder durch uneinheitliches Ansprechen der einzelnen Zellen oder auch durch Unterschiede in den elektronischen Kanälen hervorgerufen werden, können dagegen als Hochfrequenz-Unregelmäßigkeiten betrachtet werden.

Zur Korrektur dieser Unregelmäßigkeiten wird bei Scanvorrichtungen ein Verfahren eingesetzt, welches die Pixelwerte durch Verstärkung und Nullpunktverschiebung in der Weise korrigiert, dass beim Scannen eines gleichmäßigen Farbtonfelds die korrigierten Pixelwerte über die gesamte Anordnung denselben Wert annehmen.

Dies wird durch die Anwendung eines Eingabe-Korrekturalgorithmus erreicht. Vor der Anwendung des Eingabe-Korrekturalgorithmus auf ein gescanntes Bild wird jedoch die CCD-Elektronik kalibriert und eine Reihe von Verstärkungs- und Nullpunktverschiebungs-Korrekturfaktoren berechnet. Der korrigierte Pixelwert kann nach der folgen-den Gleichung berechnet werden:

$$korrigiertespixel = Verstärkungsfaktor \cdot Eingabepixel + Nullpunktverschiebung$$

In Scanvorrichtungen werden zwei Arten der Kalibrierung angewandt: elektronische Kalibrierung und digitale Kalibrierung. Das Hauptziel der elektronischen Kalibrierung ist die Einstellung der elektronischen Verstärkung und Nullpunktverschiebung der verschiedenen Kanäle in der Weise, dass ein gewünschter Empfindlichkeitsbereich des Scanners erreicht wird. Bei der dargestellten Ausführungsform müssen die Werte der elektronischen Verstärkung und Nullpunktverschiebung für die vier Kanäle eingestellt werden. Aufgrund der Sensor-Architektur ist es wesentlich, dass die Verstärkungs- und Nullpunktverschiebungswerte für die vier Kanäle feinabgestimmt werden, um die Unterschiede zwischen geraden und ungerade Kanälen und die durch die Naht (in der Mitte des Sensors) verursachten Unterschiede minimiert werden.

In einer bevorzugten Ausführungsform wird dieses Verfahren softwaregesteuert durchgeführt. Gemäß einem bevorzugten Kalibrierungsverfahren werden zur Kalibrierung der Elektronik der Scanvorrichtung zwei Referenzstreifen verwendet, deren Reflexionsdichte bekannt ist. Während des elektronischen Kalibrierungsvorgangs werden die hellen und dunklen Referenzstreifen abwechselnd in einem iterativen Prozess eingescannt, um die elektronische Verstärkung und Nullpunktverschiebung für jeden Kanal einzustellen. In der nachfolgenden Tabelle sind die Eigenschaften geeigneter Referenzstreifen aufgeführt:

| Parameter | heller Referenzwert | dunkler Referenzwert |
|---|---|---|
| Reflexionsdichte | 0,15 (+/- 0,05) | 1,35 (+/- 0,05) |
| Qualitätszone (cm/inches) | 0,81/0,32 | 0,53/0,17 |
| Pixelwert für spezifizierten dynamischen Bereich | 226 | 2 |

Nach Beendigung dieses iterativen Prozesses sollten die Unterschiede zwischen den Kanälen C und D und der Unterschied zwischen den Kanälen A und B gering sein. Außerdem sollte der Mittelwert der C- und D-Pixel im Bereich der Naht (ungefähr 100 Pixel) in der Nähe des Mittelwerts der A- und B-Pixel, die sich im Bereich der Naht befinden, liegen.

Bei der Anpassung der Verstärkung der analogen Schaltung darf kein Pixelwert den Bezugswert für helle Pixel überschreiten. Pixel, deren Wert unter dem gewünschten Pixelwert liegen, werden anschließend um den bei der Eingabepixel-Korrektur ermittelten Verstärkungsfaktor erhöht.

Bei der Anpassung der Nullpunktverschiebung der analogen Schaltung darf kein Pixelwert den Bezugswert für dunkle Pixel unterschreiten. Pixel, deren Wert über dem gewünschten Pixelwert liegt, werden anschließend um den bei der Eingabepixel-Korrektur ermittelten Nullpunktverschiebungswert korrigiert.

Das Verfahren zur Einstellung der Schaltkreis-Verstärkungs- und Nullpunktverschiebungswerte zur Erreichung der o. g. Ziele (minimale Unterschiede zwischen den Kanälen C und D sowie A und B, minimale Niveau-Unterschiede zwischen der CD- und der AB-Seite an der Naht und einen Pixelwert, der bei hellen Pixeln im Bereich des Referenzwerts für helle Pixel liegt, diesen aber nicht überschreitet, und der bei dunklen Pixeln im Bereich des Referenzwerts für dunkle Pixel liegt, diesen aber nicht unterschreitet), ist ein komplexer iterativer Prozess. Einer der Gründe hierfür ist die Wechselwirkung zwischen Verstärkungs- und Nullpunktverschiebungseinstellungen.

In der Praxis besteht aufgrund der iterativen Eigenschaft des Prozesses eine hohe Wahrscheinlichkeit, dass die Leseanordnung während des iterativen Einstellungsvorgangs am hellen oder dunklen Referenzstreifen "abgestellt" wird. Daher ist der Prozess sehr störungsanfällig, wenn der Referenzstreifen fehlerhaft ist. Eine Möglichkeit, das Störungsrisiko zu reduzieren, besteht darin, die Leseanordnung in verschiedenen Positionen innerhalb der Qualitätszone jedes Streifens abzustellen, wenn ein Wechsel von einem Referenzstreifen zu einem anderen nötig ist.

Nach der Einstellung der Verstärkung und der Nullpunktverschiebung der analogen Schaltung werden die digitalen Verstärkungs- und Nullpunktverschiebungsfaktoren berechnet. Bei diesem Prozess werden die beiden Referenzstreifen eingelesen. Beim Scannen der hellen und dunklen Referenzbereiche wird die Leseanordnung vorzugsweise bewegt, um eine möglichst große Anzahl aussagefähiger Datenpunkte zu erhalten. Das Scannen der Referenzstreifen kann mit geringerer Geschwindigkeit erfolgen als der normale Scanvorgang, um eine größere Anzahl von gescannten Zeilen zu erhalten.

Dieser Kalibrierungsschritt wird vorzugsweise softwaregesteuert ausgeführt. Für jede Pixelposition wird mittels der nachfolgend aufgeführten Gleichungen ein Durchschnittswert für helle und dunkle Referenzwerte berechnet:

**Gleichung 1**

$$\overline{dunkelpix} = \frac{\left(\sum_i dunkelpix\right)}{Zeilenanzahl}$$

$$\overline{hellpix} = \frac{\left(\sum_i hellpix\right)}{Zeilenzahl}$$

Ist der korrekte Pixelwert für ein helles Referenzpixel *hellref* und der korrekte Pixelwert für ein dunkles Referenzpixel *dunkelref*, so können Verstärkung und Nullpunktverschiebung wie folgt berechnet werden:

**Gleichung 2**

$$Verstärkungsfaktor = (hellref - dunkelref)/(\overline{hellpix} - \overline{dunkelpix})$$

$$Nullpunktverschiebung = dunkelref - (gain \cdot \overline{dunkelpix})$$

Da diese Berechnungen vorzugsweise von der CPU der Scanvorrichtung ausgeführt werden, sollte vor dem Runden mit höchster Präzision (Fließkommazahlen mit einfacher oder doppelter Genauigkeit) gearbeitet werden.

Die Berechnung der digitalen Verstärkung und Nullpunktverschiebung ist besonders störungsanfällig gegenüber fehlerhaften Referenzstreifen, insbesondere dem hellen Referenzstreifen. Ein großer dunkler Fleck auf dem hellen Referenzstreifen kann zu einem überhöhten digitalen Verstärkungswert führen, was möglicherweise einen weißen Streifen in einem gleichmäßig eingefärbten Feld zur Folge hat. Dieses Risiko kann durch die Verwendung verschiedener Scanpositionen zur Gewinnung der Bilddaten reduziert, jedoch nicht ausgeschlossen werden. Gemäß der vorliegenden Erfindung läuft zunächst ein Algorithmus zur Ermittlung eines Defekts oder einer fehlerhaften Bildstelle ab. Wird ein Defekt festgestellt, kommt ein weiterer Algorithmus zum Einsatz, um die von dem Defekt stammenden Daten aus dem Berechnungsverfahren auszuschließen.

Gemäß der vorliegenden Erfindung wird ein Fehlererkennungs-Algorithmus verwendet, um Pixelpositionen zu ermitteln, an denen möglicherweise ein Referenzstreifen-Defekt vorhanden ist. Die Fehlerermittlung erfolgt vorzugsweise mittels eines Schwellenwert-Segmentierungsverfahrens, das auch als Threshold-Verfahren bezeichnet wird. Für jede Pixelposition wird überprüft, ob die Differenz zwischen den beiden Werten einen bestimmten Schwellenwert überschreitet (der dunkle Referenzwert und der helle Referenzwert haben unterschiedliche Schwellenwerte). Ist dies der Fall, so wird ein Defekt angenommen. In diesem Fall wird angenommen, dass einige der Datenzeilen für dieses Pixel den tatsächlichen Referenzwert nicht akkurat wiedergeben.

Für jede Pixelposition werden die Pixelverstärkungs- und Nullpunktverschiebungsparameter durch Ermittlung eines Durchschnitts aus Datenzeilen der Scanvorrichtung berechnet. Hierbei sollten jedoch nicht alle Pixelwerte für jede Zeile verwendet werden, sondern nur die Werte von als fehlerfrei zu betrachtenden Pixelpositionen.

Da dieses Verfahren vorzugsweise softwaregesteuert durchgeführt wird, ist die benötigte Zeit ein wichtiger Faktor. Es wurden bereits mehrere Verfahren zur Bestimmung der Anzahl und Art der Pixelwerte, die zur Berechnung des Durchschnitts herangezogen werden sollen, erprobt. Eines der Verfahren arbeitet mit einem Sortierverfahren, welche die Anordnung auf der Basis der Beträge der Signale sortiert. Das Sortierverfahren ist jedoch zeitaufwändig. Das hier vorgeschlagene Verfahren ist neu und bringt gute Ergebnisse. Das erfindungsgemäße Verfahren sieht vor, dass die Pixeldaten in einem Histogramm gespeichert werden. Anhand des Histogramms wird der Pixelwert mit dem häufigsten Auftreten bestimmt. Auf der Basis dieses Pixelwerts aus dem Histogramm wird ein Mittelwert der Pixel innerhalb eines bestimmten Bereichs um diesen Wert berechnet und verwendet.

Der Bereich, in dem der Mittelwert berechnet werden soll, ist für helle und dunkle Bezugswerte unterschiedlich. Dieses Konzept soll anhand eines Beispiels mittels des in Fig. 2 gezeigten Histogramm-Schaubilds verdeutlicht werden. Die Pixelwerte 133 und 134 stellen fehlerhafte Bildstellen im Referenzstreifen dar. Wie gezeigt ist, beträgt die maximale Anzahl des Auftretens 40 für den Pixelwert 200. Die Gesamtanzahl der Zeilen beträgt 120. Gemäß einem Ausführungsbeispiel wird der Durchschnitt mittels zweier Werte auf beiden Seiten des Maximums berechnet. Der Durchschnitt beträgt also $(198 \cdot 10 + 199 \cdot 20 + 200 \cdot 40 + 201 \cdot 20 + 202 \cdot 20)/(10 + 20 + 40 + 30 + 20)$. Anhand dieses Verfahrens fließen die Pixelwerte 133, 134, 197 und 203 nicht in die Berechnung ein.

Dem Fachmann ist klar, dass bei Bedarf auf beiden Seiten des Maximums mehr oder weniger Werte als in dem angegebenen Beispiel verwendet werden können.

Bei den beschriebenen bevorzugten Ausführungsformen werden zwar zur Bestimmung der Verstärkung und der Nullpunktverschiebung ein heller und ein dunkler Referenzstreifen verwendet, die vorliegende Erfindung funktioniert jedoch auch mit nur einem hellen Referenzstreifen zur Bestimmung der Verstärkung.

Die vorliegende Beschreibung dient also nur zur Erläuterung der Erfindung und soll nicht einschränkend interpretiert werden. Der Geltungsbereich und der Grundgedanken der Erfindung werden durch die nachfolgenden Ansprüche definiert.

**Liste der Bezugszeichen**

A   Videokanal
B   Videokanal
C   Videokanal
D   Videokanal
133   fehlerhaftes Pixel im Referenzstreifen
134   fehlerhaftes Pixel im Referenzstreifen
197   Pixelwert
200   Pixelwert
203   Pixelwert

**Patentansprüche**

1. Verfahren zum Kalibrieren einer Scanvorrichtung,
   **gekennzeichnet durch**
   die folgenden Schritte:

   - Einlesen von mindestens einem Referenzstreifen;
   - Ermitteln von eventuell im Referenzstreifen vorhandenen Defekten;
   - Ausschließen von Daten, die von dem Defekt in dem Referenzstreifen stammen;
   - Kalibrieren der Scanvorrichtung anhand der beim Einlesen des Referenzstreifens erzeugten Daten ohne die von dem Defekt im Referenzstreifen stammenden Daten.

2. Verfahren nach Anspruch 1,
   **dadurch gekennzeichnet,**
   **dass** es sich bei mindestens einem der Referenzstreifen um einen hellen Referenzstreifen handelt.

3. Verfahren nach einem der Ansprüche 1 bis 2,
   **dadurch gekennzeichnet,**
   **dass** es sich bei mindestens einem der Referenzstreifen um einen dunklen Referenzstreifen handelt.

4. Verfahren nach einem der Ansprüche 1 bis 3,
   **dadurch gekennzeichnet,**
   **dass** es sich bei den Referenzstreifen um mindestens einen hellen und mindestens einen dunklen Referenzstreifen handelt.

5. Verfahren nach Anspruch 3,
   **dadurch gekennzeichnet,**
   **dass** die Fehlerermittlung im hellen und dunklen Referenzstreifen das Zuweisen eines Schwellenwerts für die Differenz zwischen dem dunklen Referenzstreifen und dem hellen Referenzstreifen sowie die Überprüfung umfasst, ob der Schwellenwert von einem Pixel in der Scanvorrichtung überschritten wird.

6. Verfahren zum Kalibrieren einer Scanvorrichtung, die eine Vielzahl von Pixeln hat,
   **gekennzeichnet durch**
   folgende Schritte:

   - Einlesen von mindestens einem Referenzstreifen;
   - Ermitteln von eventuell im Referenzstreifen vorhandenen Defekten;
   - Speichern der eingelesenen Daten des Referenzstreifens in einem Histogramm;
   - Ermitteln des Pixels mit dem Pixelwert mit dem häufigsten Auftreten;
   - Berechnen eines Mittelwerts der Pixel, die in einem bestimmten Bereich um den Pixelwert mit dem höchsten Auftreten herum liegen;
   - Verwenden des Mittelwerts zum Kalibrieren der Scanvorrichtung.

7. Verfahren nach Anspruch 6,
   **dadurch gekennzeichnet,**
   **dass** es sich bei mindestens einem der Referenzstreifen um einen hellen Referenzstreifen handelt.

8. Verfahren nach einem der Ansprüche 6 bis 7,
   **dadurch gekennzeichnet,**
   **dass** es sich bei mindestens einem der Referenzstreifen um einen dunklen Referenzstreifen handelt.

9. Verfahren nach einem der Ansprüche 6 bis 8,
   **dadurch gekennzeichnet,**
   **dass** es sich bei den Referenzstreifen um mindestens einen hellen und mindestens einen dunklen Referenzstreifen handelt.

10. Verfahren nach Anspruch 9,
    **dadurch gekennzeichnet,**

**dass** die Fehlerermittlung im hellen und dunklen Referenzstreifen das Zuweisen eines Schwellenwerts für die Differenz zwischen dem dunklen Referenzstreifen und dem hellen Referenzstreifen sowie die Überprüfung umfasst, ob der Schwellenwert von einem Pixel in der Scanvorrichtung überschritten wird.

gespiegelt

ungespiegelt

Pixel 1

Pixel 7300

Fig.1

Fig.2